(19) Europäisches Patentamt
European Patent Office
Office européen des brevets

(11) EP 0 740 403 A1

(12) EUROPEAN PATENT APPLICATION

(43) Date of publication:
30.10.1996 Bulletin 1996/44

(51) Int. Cl.⁶: H02K 15/06, H02K 15/02,
H02K 15/085, H02K 1/16

(21) Application number: 96105464.0

(22) Date of filing: 04.04.1996

(84) Designated Contracting States:
DE FR GB

(30) Priority: 25.04.1995 JP 100938/95

(71) Applicant: Toyota Jidosha Kabushiki Kaisha
Toyota-shi, Aichi-ken 471-71 (JP)

(72) Inventor: Miyazaki, Hiroshi
Toyota-shi, Aichi-ken 471-71 (JP)

(74) Representative: KUHNEN, WACKER & PARTNER
Alois-Steinecker-Strasse 22
85354 Freising (DE)

(54) A method for manufacturing motor stators

(57) Coil pieces which have been shaped in advance into coils are individually inserted into the slots of a stator core. Several of the coil pieces 12c which are inserted last are inserted into the outer circumference layer 20 of the slots by first lifting coil pieces 12a which have already been inserted into the inner circumference layer 18 of those slots. During this process, each of the flat type conducting wires 22 of the sides of the coil pieces 12a remaining inside slots 14b rotates, reducing the deformation of the coil piece 12a.

Fig. 3

Printed by Rank Xerox (UK) Business Services
2.13.8/3.4

## Description

### Background of the Invention

#### Field of the Invention

The invention relates to a method of manufacturing motor stators, and in particular to a method for manufacturing stators in which coil pieces which have been formed in advance by shaping conducting wire into coils are inserted into slots in the stator core as well as to the stator cores used in this method.

#### Description of the Prior Art

The stator, which generates the revolving magnetic field of a motor, has indentations and protrusions arranged alternately along the inside surface of a cylindrical core, which is made of magnetic material. Conducting wire is imbedded in the indentations, such that the wire encircles the protrusions. The indentations are referred to as slots, the protrusions as poles, and the looped conducting wire as coils. Since it is necessary that the conducting wire loops along the inside surface of the core cylinder, the manufacturing process is cumbersome, and since it is necessary to fit conducting wires into the slots at a high density, many methods for looping the conducting wire have been proposed.

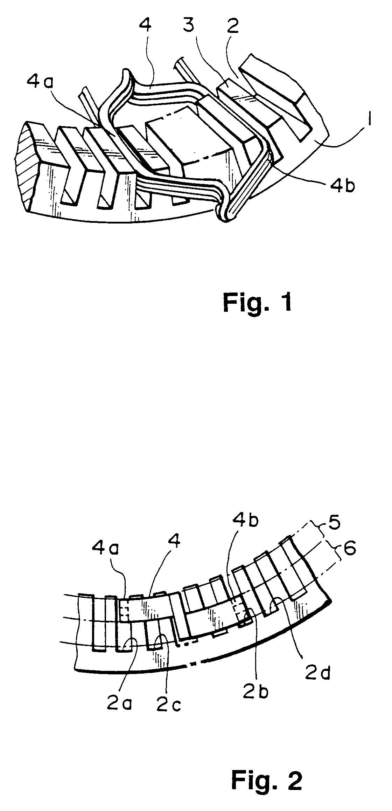

One method that has been proposed is to first manufacture coil pieces by forming conducting wire into coils, and then to insert these coil pieces one by one into the slots of the stator core. Fig. 1 and Fig. 2 explain the manufacturing process of such a stator. On the inside of the cylinder, indentations and protrusions extending parallel to the cylinder axis are formed alternately in the direction of the cylinder circumference. The indentations are the slots 2 of the stator, and the protrusions are the magnetic poles 3. Coil pieces 4 formed in advance into a certain shape are inserted into the slots 2. As shown in the figure, the coil pieces are formed by looping straight angled conducting wire with a parallelepiped cross section three times into a hexagonal shape, with one pair of opposite sides separated by a certain distance such that the coil pieces can be inserted into the slots 2. As shown in the figure, one side 4a of the coil piece 4 rests in the inner circumference layer 5, the inner layer of slot 2a, whereas 4b, the side opposite side 4a, rests in the outer circumference layer 6 of slot 2b which is 4 slots away. The coil pieces 4 are inserted into the slots one by one. The next coil piece 4 to be inserted will have one side resting in the inner circumference layer of slot 2c, which is next to slot 2a on the right, and the other side resting in the outer circumference layer 6 of slot 2d. By repeating this insertion process, fitting coil pieces 4 into all the slots 2 and fixing the coil pieces 4 in place by means of a resin or glue, the stator is completed.

In the above-mentioned stator manufacturing method, with regard to the last four coil pieces to be inserted, when inserting one side into the outer circumference layer, it is necessary to lift the side of an initially fitted coil piece resting in the inner circumference layer in order to slide the side into the outer circumference layer 6. This process is difficult to automate and is performed by hand. Since considerable force is required to bend and lift the conducting wire, the work is heavy labor and thus increases the burden on the worker. Further, since the worker must work with his hand inside the cylinder of the rotor, it is difficult to maintain a comfortable posture and therefore efficiency is further sacrificed.

Further, since the work gives extra bend to conducting wire, the coating is likely to be damaged when it is straightened back into a slot and the insulation of the coil can be impaired.

### Summary of the Invention

In order to solve the aforementioned problems, the object of the invention is to provide a method of manufacturing stators and a stator core that will allow for ease in inserting coil pieces and decrease the damage to the coating on the conducting wire.

To accomplish the aforementioned object in the stator manufacturing method of the invention, coil pieces, which have been shaped into coils by coiling conducting wire a plurality of times, are inserted one by one into a plurality of slots of the stator core of a motor in the direction of the circumference. The method comprises a process in which one side of the coil piece is inserted into the outer circumference layer of the slot, whereas the other side is inserted into the inner circumference layer, inside the outer circumference layers of the located a specified number of slots behind the previous slots in the order of insertion of the coil pieces, and a process in which, when inserting coil pieces into the outer circumference layer of slots which already have coil pieces inserted into their inner circumference layer, the other sides of the coil pieces which have already been inserted are rotated inside the outer circumference layer as the said coil pieces are lifted completely, allowing for the sides of the other coil pieces to be slid into their outer circumference layers.

According to this method, when lifting a coil piece which has already been inserted, the conducting wire which has been inserted into the outer circumference layer of the coil piece is made to rotate inside the said outer circumference layer, and thus there is less deformation of the coil piece and the burden on the worker and the risk for imparing insulation are reduced.

Regarding the stator core used in the above-mentioned stator manufacturing method, with respect only to the slots in which the coil pieces rotate inside the outer circumference layers, it is preferable that at least the outer circumference layer sections are formed of a width wider than the widths of other slots.

When using such a stator core, in the process of lifting the coil pieces, it is easier for the coil pieces to rotate in the outer circumference section, reducing the burden on the worker.

Further, the other stator manufacturing method related to the invention is a manufacturing method for stators in which coil pieces, which have been shaped into coils by coiling conducting wire a plurality of times, are inserted into the slots of the stator core of a motor, comprising a process in which split pieces of the stator core which are the halved forms of the stator core are formed, a process of manufacturing split pieces of stators wherein during the insertion of the sides of the coil pieces into each slot of the split pieces of the stator core, when there is only one slot for insertion, the remaining side of said coil piece is left uninserted and protrudes from the split piece of the stator core, and a process in which stators are formed by fitting together split pieces of stator cores, while inserting the uninserted sides of the coil pieces into the slots of the corresponding split piece of the stator.

According to this method, the process of lifting coil pieces is eliminated, making it possible to reduce the burden on the worker and diminish the damage to the coating of the conducting wire.

Further, the process for forming the split pieces of the stator core can be made to comprise a process in which a plurality of magnetic steel plates formed in the shape of the cross section of the stator are layered to form a specific thickness, a process in which the magnetic steel plates are halved one by one, and a process in which the magnetic steel plates are layered again in the same order that they were first layered, forming the split pieces of the stator.

According to this method, it is possible to prevent differences in the thickness of the layered coil pieces.

Further, the process for fitting together the split pieces of the stator core can be performed by aligning an indented part and a protruding part on the respective surfaces of the pieces to be fitted together.

According to this method, the precise alignment of the split pieces is possible, preventing increases in magnetic resistance due to lowered alignment precision.

Further, the process for manufacturing stators by fitting together split stator cores can be made to include a process in which the uninserted sides of the coil pieces are inserted into the furrows of a position-aligning tool attached to the inside surface of a split piece of a stator core, with the furrows corresponding to the positions of slots on the other split piece of the stator core, the process for forming the stator comprising the insertion of the sides of the coil pieces inside the furrows by moving them from the furrows to inside the slots when fitting the split pieces of the stator together.

According to this method, the fitting process can be performed with greater ease.

Brief Description of the Drawings:

Fig. 1 is a drawing showing the conventional method for inserting the coil pieces of stator cores in order to manufacture stators.

Fig. 2 is a drawing showing the conventional method for inserting the coil pieces of stator cores in order to manufacture stators.

Fig. 3 is a drawing explaining the first preferred embodiment of the invention, showing in particular a state in which a coil piece is inserted into slots.

Fig. 4 is a drawing explaining the first preferred embodiment of the invention, describing the process in which coil pieces are inserted later by sliding them into place.

Fig. 5A, 5B and 5C are drawings explaining the first preferred embodiment of the invention, showing the behavior of the conducting wire inside the slots.

Fig. 6 is a drawing showing an example of a cross-sectional shape for a slot.

Fig. 7A and 7B are drawings showing an example of a cross-sectional shape for a slot.

Fig. 8A to 8H are drawings showing the flow of processes in the manufacture of the stator according to the second preferred embodiment of the invention.

Fig. 9A and 9B are drawings showing a welding tool for use in welding the split pieces of the stator core of the second preferred embodiment.

Fig. 10 is a drawing showing a welding tool for use in welding the split pieces of the stator core of the second preferred embodiment.

Fig. 11 is a drawing showing the insertion of coil pieces into the split pieces of the stator core of the second preferred embodiment.

Fig. 12 is a drawing showing a process by which the two split pieces of the stator of the second preferred embodiment are fitted together.

Fig. 13 is a drawing showing a process by which the two split pieces of the stator of the second preferred embodiment are fitted together.

Fig. 14 is a drawing showing a process by which the two split pieces of the stator of the second preferred embodiment are fitted together, showing in particular a case in which a tool is used to position the coil pieces.

Fig. 15 is a drawing showing an alternate method by which the two split pieces of the stator of the second preferred embodiment are fitted together.

Fig. 16 is a drawing showing a tool for welding the two split pieces of the stator of the second preferred embodiment.

Fig. 17 is a drawing showing a tool for welding the two split pieces of the stator of the second preferred embodiment.

Fig. 18 is a drawing showing a tool for welding the two split pieces of the stator of the second preferred embodiment.

Fig. 19 is a drawing showing an example of a structure for aligning the surfaces of the two split pieces of the stator of the second preferred embodiment.

Fig. 20 is a drawing showing a tool for welding the two split pieces of the stator of the second preferred embodiment.

Description of the Preferred Embodiments

The preferred embodiments related to the invention are explained below with reference to the accompanying figures.

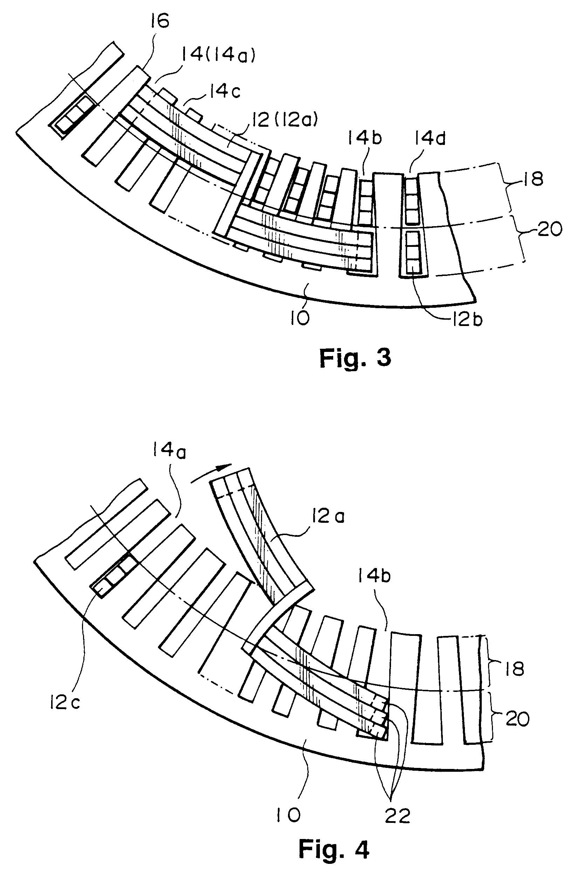

Fig.3 explains the manufacturing method for the stator of the first embodiment. The figure shows a situation where a few coil pieces 12 have already been inserted into the stator core 10. The stator core 10 is formed such that indentations and protrusions extending in the direction of the axis along the inside surface of the cylinder are arranged alternately along the circumference of the cylinder. When the stator is completed, the indentations serve as the slots 14 and the protrusions serve as the magnetic poles 16. The coil pieces 12 have structures similar to the coil pieces 4 of the prior art. The side of the hexagonal coil piece 12 that is first inserted is placed in the inner circumference layer 18 of slot 14a, and the opposite side is positioned so as to rest in the outer circumference layer 20 of slot 14b which is a certain number of slots remote from slot 14a (hereinafter, numbers without letters will be used to refer to all of the structural elements comprising a plurality of slots or coil pieces, and numbers accompanied by a letter will be used to refer to specific slots or coil pieces). The coil piece 12b that is inserted second is inserted into the slot depicted to the right of the first coil piece 12a in the figure. In other words, one side is inserted into the inner circumference layer 18 of slot 14c located to the right of slot 14a, and the opposite side is inserted into the outer circumference layer 20 of slot 14d located to the right of slot 14c. In this manner, the coil pieces are inserted one by one.

As the coil pieces 12 are inserted into the stator core 10 one by one in the direction of the cylinder circumference, several of the coil pieces inserted at the end will require that coil pieces already inserted into the inner circumference layers 18 of slots be extracted from their slots so that the final coil pieces can be slid into place in the outer circumference layer of these slots. Since one side of the first inserted coil piece 12a is positioned in the inner circumference layer 18 of slot 14a, it lies in the way when inserting one side of coil piece 12c into the outer circumference layer 20 of the slot 14a. Thus, as shown in Fig. 4, the side of the coil piece 12a which has already been inserted into slot 14a must be lifted from the slot in the direction of the arrow, such that one side of coil piece 12c can be inserted into the outer circumference layer 20 of slot 14a.

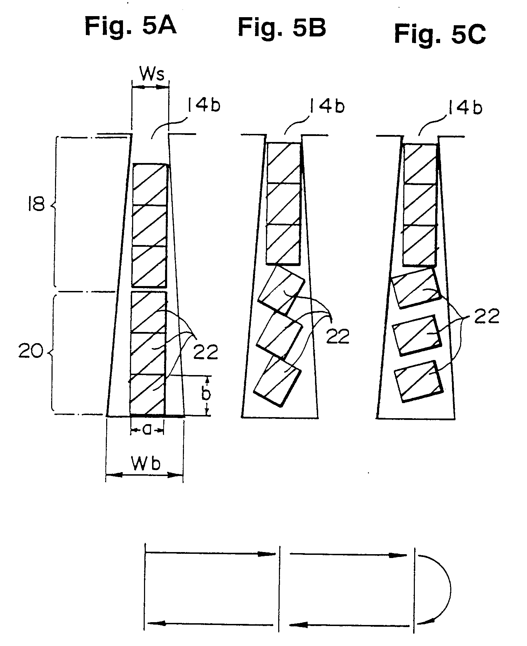

During the process, in the preferred embodiment, each of the flat type angle conducting wires 22 making up the coil piece 12a rotate within the slot 14b, reducing the amount of plastic deformation of the conducting wire. Figures 5A, 5B, and 5C show, in succession, the behavior of the flat type conducting wire 22 of coil piece 12a inside slot 14b before, during and after the lifting process. Fig. 5A shows the state prior to lifting, with the flat type conducting wires 22 arranged in a line on top of each other. In this state, the base of each flat type conducting wire 22 is a, and its height is b. Further, the slot 14b is formed such that the width at the opening (Ws) is narrow, and the width at the base (Wb) is wide. Therefore, although slot 14b has a trapezoidal cross-sectional shape wide at the base, since this does not affect the performance of the motor as long as the width of magnetic pole 16 does not become narrower at its base than at its tip, the width Ws at the opening of the aforementioned slot 14b and the width Wb at the base of the slot have been set within these bounds. As the coil piece 12a is lifted, as depicted in Figs. 5B and 5C, the flat type conducting wire 22 in the outer circumference layer 20 of the slot 14b rotates. When the other coil piece has been slid into place, the flat typeconducting wire 22 returns to the state of Fig. 5A. Further, when the flat typeconducting wire 22 rotates inside slot 14b, its greatest width is the conducting wire's diagonal line $(a^2 + b^2)^{1/2}$. Therefore, it is desirable that the width of the outer circumference layer be $(a^2 + b^2)^{1/2}$.

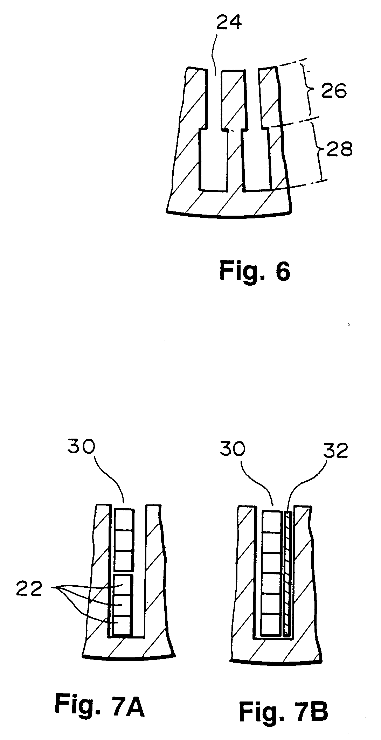

The number of slots 14 in which the aforementioned lifting of coil pieces 12 is performed is a certain number consisting of slots in which coil pieces are first inserted, this number corresponding to the number of slots lying in between the two sides of coil pieces 12 inserted into the slots. Therefore, it suffices to form the aforementioned trapezoidal cross sections only for this number of slots, with the remaining slots 14 having a rectangular cross section. Further, as shown in Fig. 6, it is also possible to vary the width of the inner circumference layer 26 and the outer circumference layer 28 of the slots 24, with the outer circumference layer having a greater width such that the straight angle conducting wire can rotate in this section. Moreover, as shown in Fig. 7A, it is also possible to form the slots 30 in which lifting of the coil piece is necessary to have widths wider than that of the conducting wire, filling the spaces with spacers 32 after the fitting of the coil pieces has been completed, as shown in Fig. 7B. Slots with shapes as shown in Fig. 6 or Figs. 7A and 7B are prepared such that there are at least the same number as the number of slots in which lifting of coil pieces is required.

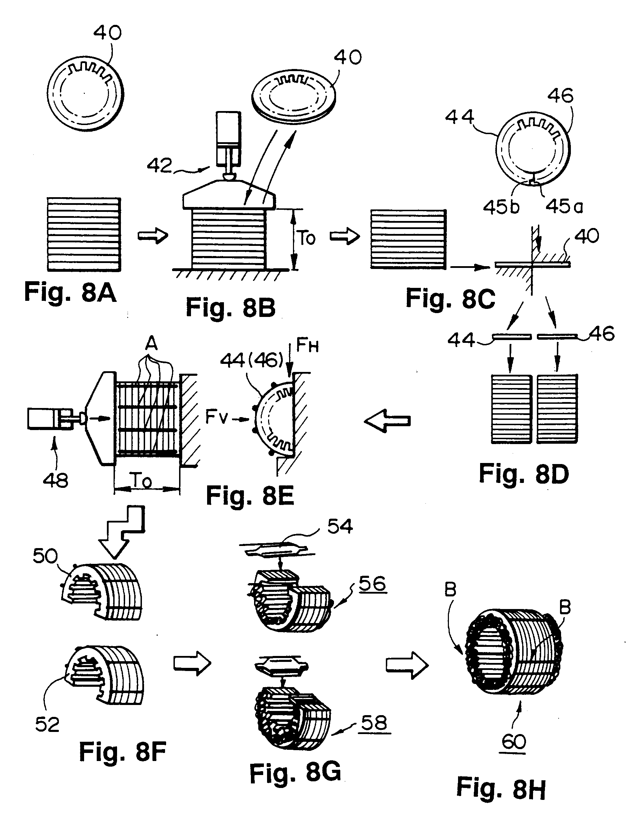

The second preferred embodiment is explained below. Figs. 8A to 8H summarizes the manufacturing method of the motor stator related to the preferred embodiment. As shown in Fig. 8A, a certain number of magnetic steel plates 40 with the same shape as the cross section of the stator and of a determined thickness are layered. Next, as shown in Fig. 8B, using a press 42, a certain amount of pressure is put on the layered magnetic plates 40 in the axial direction. This eliminates cambers and undulations in the magnetic plates 40, as well as burrs that occur when punching out the plates. Further, magnetic steel plates 40 are added or removed during this step to adjust the total thickness $T_0$ of the layers to the required size. Next, as shown in Fig. 8C, the layered magnetic steel plates 40 are removed one by one and halved, yielding split steel plates 44 and 46. In the process, the diameter of the split surface of split steel plates 44 and 46 will increase by a small amount. Further, a protrusion 45a and a corresponding indentation 45b are formed along the split surfaces of the two split steel plates.

Next, as shown in Fig. 8D, the split steel plates 44 and 46 are layered again in the same order as before they were halved. As shown in Fig. 8E, for each layered split steel plate, a force $F_H$ is applied in the direction of the split in order to correct for the increase in diameter occurring during the splitting process, and force $F_V$ is applied in the orthogonal direction to keep the split steel plates 44 and 46 aligned and stationary. Pressure is also applied in the axial direction using a press 48 in order to eliminate any burrs or cambers that are formed when the steel plates are split. In this state, the sections A along the outer rim of the split steel plates 44 and 46 are welded, yielding the split pieces 50 and 52 of the stator core shown in Fig. 8F. Next, as shown in Fig. 8G, the coil pieces 54 are inserted into the split pieces 50 and 52 of the stator core, yielding the split pieces 56 and 58 of the stator. The coil pieces 54 have the same structure as the aforementioned coil pieces 12 of the first preferred embodiment. Finally, as shown in Fig. 8H, the two split pieces 56 and 58 of the stator are fitted together, and the junction B is welded to yield the completed stator 60.

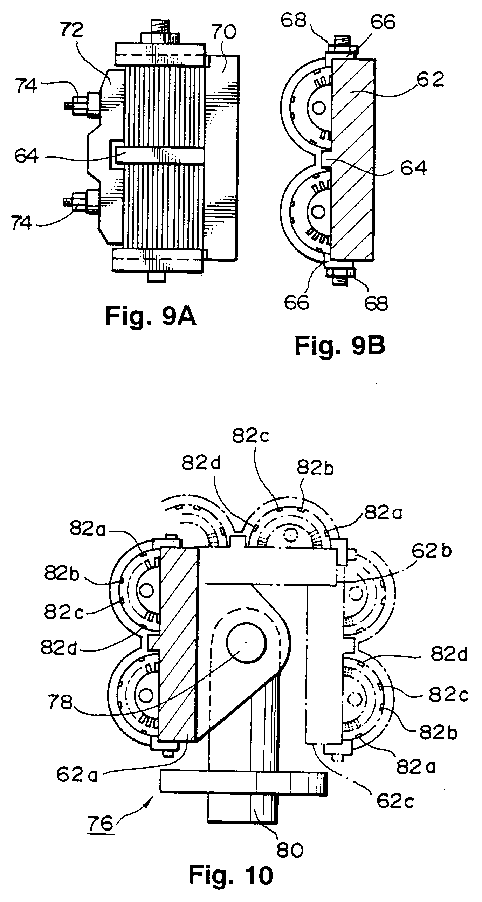

Next, the process in Fig. 8E will be explained in detail. Fig. 9A and 9B show the state in which the layered split steel plates are mounted on the welding platform. Fig. 9A shows a front view, and Fig. 9B shows a side view. The split steel plates are mounted on the platform in such a way that the split surfaces are in full contact with the base of the platform 62, and the plates are held in place in between the stationary protrusion 64 in the center of the platform 62 and the side clamps 66. The side clamps 66 are held in place on the platform 62 by means of bolts 68, the distance from the side clamp 66 to the stationary protrusion 64 being equal to the diameter of the stator when extra space has been eliminated. Thus, it is possible to correct for any increases in diameter resulting from splitting the torus of the magnetic steel plates 40.

Further, there is a raised edge 70 on one side of the welding platform 62, and the split steel plates are clamped in place in the axial direction between this edge and the end clamp 72. A gauge (not shown in the figure) measures the distance between the raised edge and the end clamp 72, and the bolts 74 are turned to tighten the clamp 72 until the gauge indicates the aforementioned thickness $T_0$. In this manner, it is possible to achieve the specified thickness of the process shown in Fig. 8B, and any burrs or cambers created during splitting can be eliminated.

As shown in Fig. 10, the welding platform 62 is located on a moving platform which permits rotation around axes 78 and 80. First, with the welding platform in the position shown at 62a, the welding of part 82a which is directly on top is performed. In order to prevent the running of welding metal, it is imperative that the surface to be welded is facing upward. Therefore, when welding parts 82b and 82c, the welding platform is rotated around axis 78 to the position shown at 62b. When welding part 82d, the welding platform is further rotated to position 62c, and is also rotated 180° around axis 80. By rotating the platform around axis 80, it is possible to position the platform in the same manner as for welding part 82a, thus increasing efficiency.

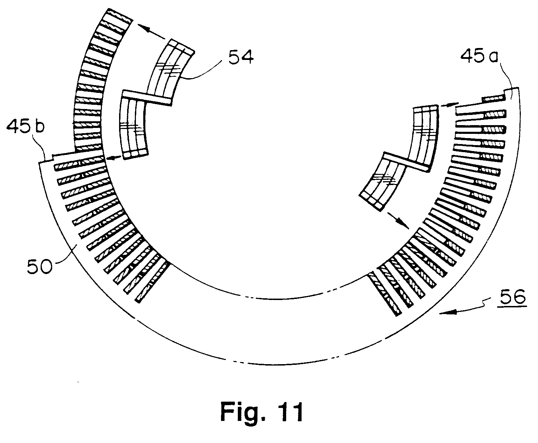

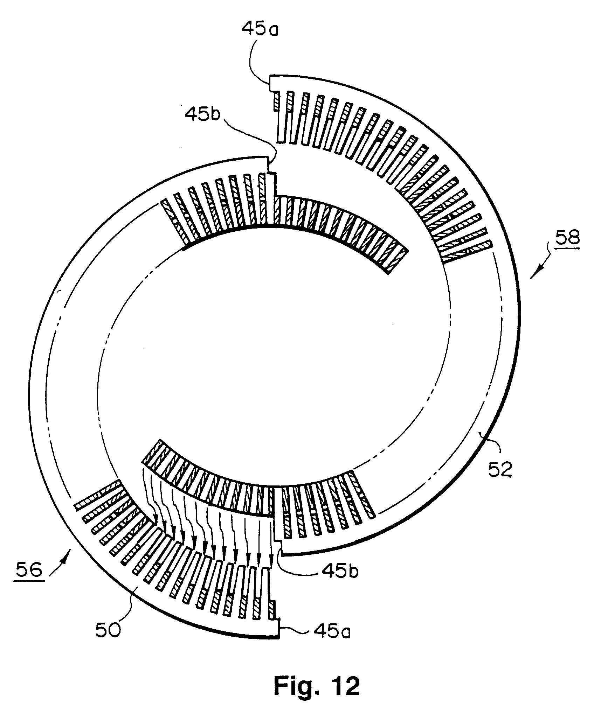

Next, the processes shown in Figs. 8G and 8H will be explained in detail. Fig. 11 shows a split piece 50 of a stator core with coil pieces 54 inserted. The corresponding split piece 52 of the stator core is similarly assembled. The coil pieces protruding on the left end of the split piece 50 of the stator core will be inserted into slots on the other split piece 52 of the stator core. On the other hand, coil pieces have been inserted into only the outer circumference layer of the slots on the right end. In these slots the inner circumference layers will be filled by sides of coil pieces which have already been inserted into the other split piece of the stator core. In this manner, the split pieces 56 and 58 of the stator are manufactured. The split pieces of the stator core are then brought together facing each other as shown in Fig. 12, and the protruding, uninserted coil piece sides are inserted one by one.

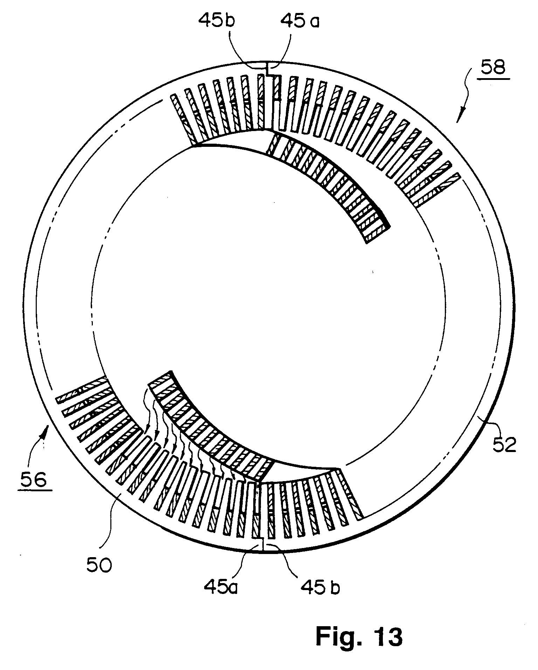

In Fig. 13, a method is shown for inserting the remaining coil pieces after the split pieces 50 and 52 of the stator core have been fitted together. By engaging the protruding part 45a and the indented part 45b at the ends of split pieces 50 and 52 respectively of the stator core, the two pieces can be fitted together in the correct position. By slightly gathering the uninserted sides together, the uninserted sides of the coil pieces can be made to fit into their proper positions.

Further, the coil pieces to be inserted after fitting split pieces 50 and 52 together can be inserted with relatively less force if the distance between the two sides to be inserted into the slots is narrowed in advance.

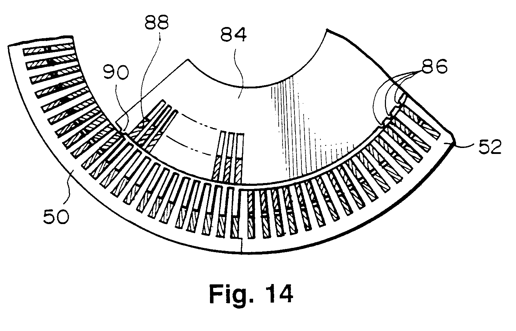

Fig. 14 shows a method for inserting the uninserted sides of the coil pieces using a jig. The uninserted sides of the coil pieces at the end of the split piece 52 of the stator are fixed into position for insertion into their respective slots using a position-fixing jig 84. The position-fixing jig 84 has protrusions 86 positioned to correspond to the slots of the split piece 52 of the stator core, allowing for the split piece 52 of the stator core and the position-fixing jig 84 to be set together in their proper positions. Further, the position-fixing jig has grooves 88 in which to place the uninserted coil pieces. There is also a protrusion 90 corresponding in position to a slot on the other split piece 50 of the stator core, making it possible to set the positions when fitting the split pieces together. Further, the split pieces 56 and 58 of the stator are fixed together with the remaining sides of the coil pieces in the grooves 88, after which thin blades are inserted into the furrows 88 to push the coil pieces into their slots. In this manner, the insertion of the remaining coil pieces can be performed with ease.

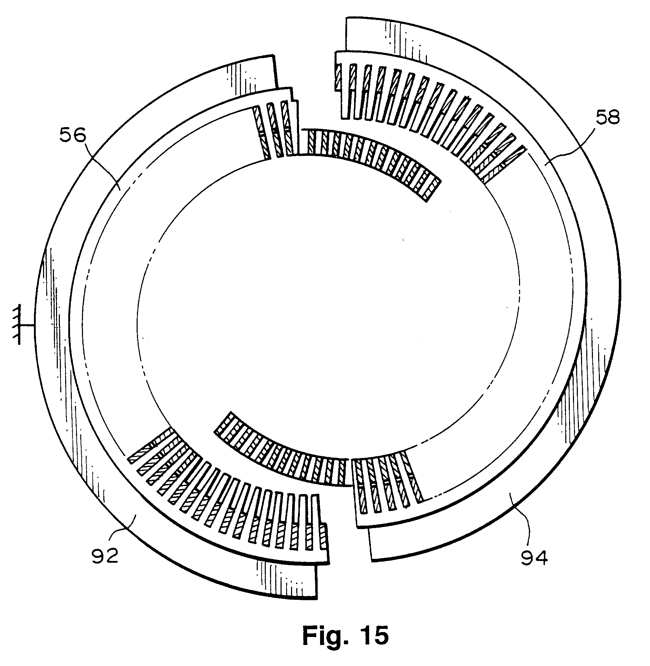

Fig. 15 shows a method for inserting the coil pieces as the split pieces of the stator are brought together, performing the insertion and fitting together simultaneously. The split pieces 56 and 58 of the stator are held by holders 92 and 94. One holder 92 is stationary, while the other holder 94 can move parallel to or rotate with respect to the holder 92. The coil pieces are inserted one by one, the holder moving in accordance with the angle of each coil piece, positioning the coil piece such that it can be inserted into its slot in a repetitive process. In this way, it is possible to fit the split pieces of the stator together without damaging the coil pieces.

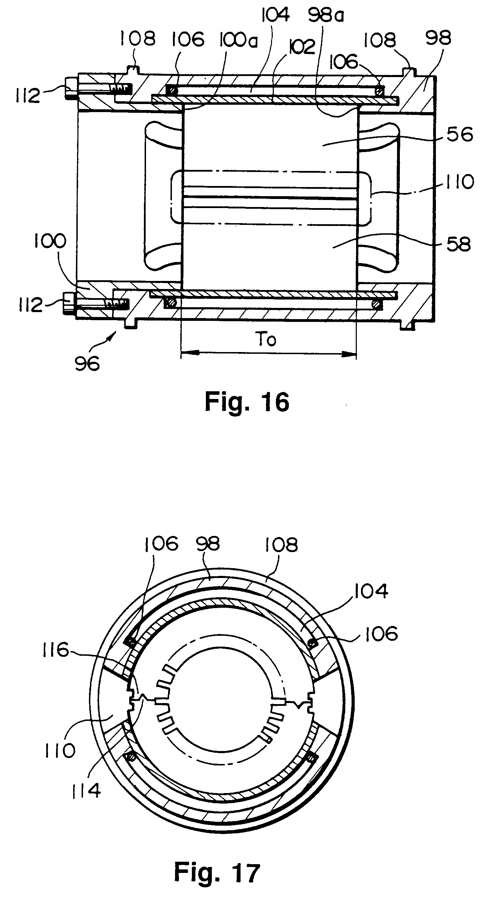

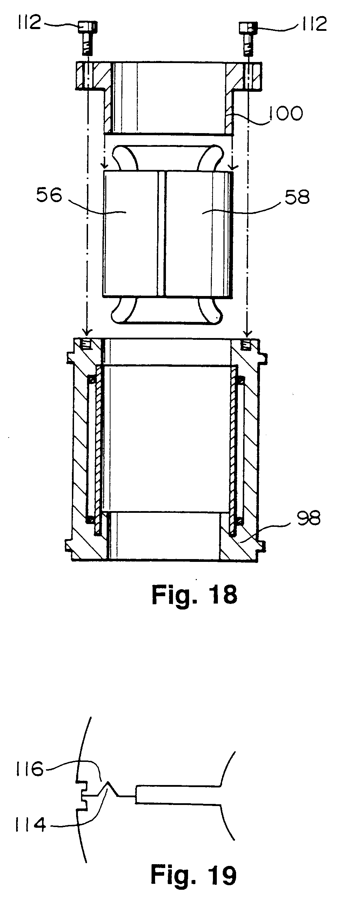

Figures 16, 17 and 18 shows a welding tool, for use in the process shown in Fig. 8H, which holds the split pieces 56 and 58 of the stator together with a specified force. In Fig. 16 is a flat cross-sectional view of the tool 96 holding the split pieces 56 and 58 of the stator together, including the cylindrical axis. Fig. 17 is a flat cross-sectional view at an angle orthogonal to the cylindrical axis. Fig. 18 explains how the split pieces 56 and 58 of the stator are fixed onto the tool 96.

The tool 96 consists of an outer cylinder 98 and a push cylinder 100 which clamp and fix the split pieces 56 and 58 of the stator in the axial direction. The distance between the bottom 98a of the outer cylinder and the tip 100a the push cylinder 100a against which the split pieces 56 and 58 of the stator rest is fixed to be the aforementioned $T_0,0$ the length of the completed stator. Further, along the inner surface of the outer cylinder 98 are two pressurizing plates 102, the space between the pressurizing plates and the outer cylinder forming pressurizing chambers 104. At the end of the pressurizing chambers 104 are seals 106. Further, on the outer surface of the outer cylinder 98 are guides 108, which will be explained later. Further, on the sides of the outer cylinder, at positions corresponding to the split surfaces of the split pieces 56 and 58 of the stator are welding windows 110, through which welding is performed.

As shown in Fig. 18, the split pieces 56 and 58 of the stator are inserted into the outer cylinder 98, and the push cylinder 100 is fixed in place using the bolts 112. In this manner the split pieces 56 and 58 are securely held in place. As a hydraulic fluid such as compressed air is sent into the pressurizing chamber 104, the two pressurizing plates move toward each other, pushing the split pieces 56 and 58 of the stator close together. In this state, welding is conducted through the welding windows 110, integrating the split pieces of the stator. In order to assure that the split pieces 56 and 58 of the stator are fitted together precisely, it is possible to add a triangular protrusion 114 and indentation 116 as is shown in Fig. 19.

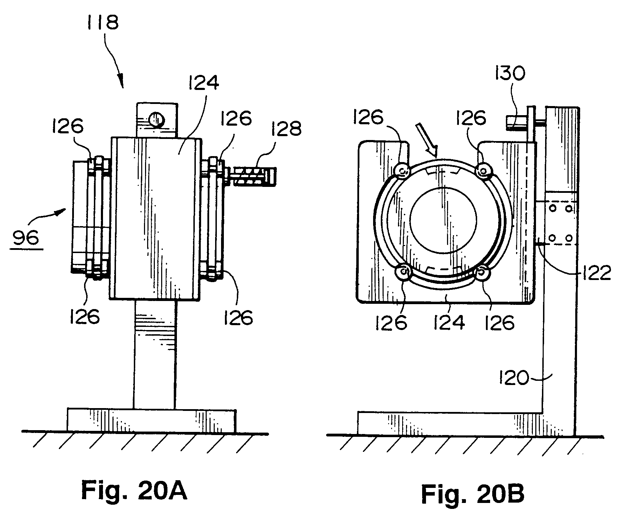

Figures 20A and 20B show a stand 118 for holding the aforementioned welding tool 96. The stand 118 has a base plate 120 that is fixed to the floor, and a holder 124 which rotates around axis 112. On each side of the holder 124 are four rollers 126 corresponding to the aforementioned guides 108 of the welding jig 96. Therefore, using the handle 128 on the welding jig 96, the welding jig 96 can be rotated while it is held in the holder 124, allowing the section to be welded to be turned with ease so that it is facing upward. Further, since the holder 124 rotates around the axis 122, when mounting the welding jig 96, it is possible to mount the welding jig 96 in an upright position, turning it on its side when welding. Thus, welding direction is always the arrows direction in drawing. Further, by the use of a lock pin 130, it is possible to fix the holder 124 in position when welding and mounting.

As described above, according to the aforementioned preferred embodiments, when inserting coil pieces into stator cores, it is possible to reduce the number of processes involving force, thus alleviating the burden on the worker.

## Claims

1. A manufacturing method for stators in which coil pieces which have been shaped into coils by coiling conducting wire a plurality of times, are individually inserted into a plurality of slots of the stator core of a motor in the direction of the circumference, comprising:

   inserting one side of the coil piece into an outer circumference layer of the slot, while the other side is inserted into an inner circumference layer of the slot located a specified number of slots behind the previous slots in the order of insertion of the coil pieces; and

   rotating the other sides of the coil pieces which have already beein inserted inside the outer circumference layer as the whole of said coil pieces are liffted, when inserting coil pieces into the outer circumference layer of slots which already have coil pieces inserted into their inner circumference layer, allowing for the sides of the other coil pieces to be slid into their outer circumference layers.

2. The stator core used in the stator manufacturing method of Claim 1, in which, with respect to only the slots in which the coil pieces rotate inside the outer circumference layers, at least the outer circumference layer sections are formed having a width wider than the widths of other slots.

3. The stator core of Claim 2, in which the slots inside the outer circumference layers within which the coil pieces rotate have a trapezoidal cross section.

4. The stator core of Claim 2, in which the slots in which the coil pieces rotate inside the outer circumference layers have inner circumference layers of a first width equal to the widths of other slots, and only the outer circumference layers are of a second width greater than the width of other slots.

5. The stator core of Claim 2 in which the slots inside the outer circumference layers within which the coil pieces rotate are such that the width of the inner circumference layer and the outer circumference layer is greater than the width of other slots, the difference being equivalent to the thickness of the spacers inserted into the space between the coil pieces and the slots after the insertion of coil pieces has been completed.

6. A manufacturing method for stators in which coil pieces which have been shaped into coils by coiling conducting wire a plurality of times are inserted into the slots of the stator core of a motor, comprising the steps of:

forming split pieces of the stator core which are halved forms of the stator core;

manufacturing split pieces of stators by leaving a remaining side of said cipl piece is uninserted and protruding during the insertion of the sides of the coil pieces into each slot of the split pieces of the stator core, when there is only one slot for insertion; and

forming stators by fitting together split pieces of stator cores, while inserting the uninserted sides of the coil pieces into the slots of the corresponding split piece of the stator.

7. The stator manufacturing method of Claim 6, in which the step of forming the split pieces of the stator core further comprises the steps of:

layering a plurality of magnetic steel plates formed in the shape of the cross section of the stator to form a specific thickness;

individually halving the magnetic steel plates; and

forming the split pieces of the stator by layering the magnetic steel plates again in the same order that they were first layered .

8. The stator manufacturing method of Claim 6 or Claim 7, in which the step of for fitting together the split pieces of the stator core is performed by aligning an indented part and a protruding part on the respective surfaces of the pieces to be fitted together.

9. The manufacturing process of any of Claims 6 to 8, further comprising a step of inserting the uninserted sides of the coil pieces into the furrows of a position-aligning tool attached to the inside surface of a split piece of a stator core with the furrows corresponding to the positions of slots on the other split piece of the stator core, and wherein the step of forming the aforementioned stator comprises the inserting the sides of the aforementioned coil pieces inside the furrows by moving them from the aforementioned furrows to the inside of the slots when fitting the split pieces of the stator together.

10. Motors using stators manufactured by the method of any one of Claim 1 and Claims 6 to 9.

**Fig. 1**

**Fig. 2**

**Fig. 3**

**Fig. 4**

# Fig. 5A    Fig. 5B    Fig. 5C

**Fig. 6**

**Fig. 7A**

**Fig. 7B**

Fig. 8A

Fig. 8B

Fig. 8C

Fig. 8D

Fig. 8E

Fig. 8F

Fig. 8G

Fig. 8H

**Fig. 9A**

**Fig. 9B**

**Fig. 10**

Fig. 11

**Fig. 12**

**Fig. 13**

Fig. 14

**Fig. 15**

**Fig. 16**

**Fig. 17**

112          112

100

56          58

98

**Fig. 18**

116

114

**Fig. 19**

**Fig. 20A**

**Fig. 20B**

**European Patent Office**

# EUROPEAN SEARCH REPORT

Application Number

EP 96 10 5464

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | PATENT ABSTRACTS OF JAPAN vol. 006, no. 230 (E-142), 16 November 1982 & JP-A-57 132747 (TOKYO SHIBAURA DENKI KK), 17 August 1982, | 6,8,10 | H02K15/06 H02K15/02 H02K15/085 H02K1/16 |
| A | * abstract * | 9 | |
| A | WO-A-94 06192 (UNIQUE MOBILITY) 17 March 1994 abstract * figures 1,6-8 * | 6,8 | |

TECHNICAL FIELDS SEARCHED (Int.Cl.6)

H02K

The present search report has been drawn up for all claims

| Place of search | Date of completion of the search | Examiner |
|---|---|---|
| THE HAGUE | 19 July 1996 | Zoukas, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)